Europäisches Patentamt

European Patent Office

Office européen des brevets

(19)

(11)  EP 0 543 725 B1

(12)  **FASCICULE DE BREVET EUROPEEN**

(45) Date de publication et mention
de la délivrance du brevet:
**26.06.1996   Bulletin 1996/26**

(51) Int Cl.⁶: **C09K 11/85**, H01L 33/00,
H01S 3/18

(21) Numéro de dépôt: **92403099.2**

(22) Date de dépôt: **18.11.1992**

(54) **Structure de composant optique intégré contenant une terre rare, procédé de réalisation et applications**

Seltene Erden enthaltende integrierte optische Komponentenstruktur, Verfahren zu ihrer Herstellung und Anwendungen

Rare earth-containing integrated optical component structure, method of manufacturing and applications thereof

(84) Etats contractants désignés:
**DE GB**

(30) Priorité: **20.11.1991   FR 9114303**

(43) Date de publication de la demande:
**26.05.1993   Bulletin 1993/21**

(73) Titulaire: **FRANCE TELECOM**
**75015 Paris (FR)**

(72) Inventeurs:
• **Favennec, Pierre-Noel**
**F-22300 Lannion (FR)**
• **L'Haridon, Hélène**
**F-22300 Lannion (FR)**
• **Moutonnet, Danielle**
**F-22560 Pleumeur Bodou (FR)**

• **Barriere, Albert**
**F-33405 Talence (FR)**
• **Raoux, Sébastien**
**F-33000 Bordeaux (FR)**
• **Mombelli, Bruno**
**F-33000 Bordeaux (FR)**

(74) Mandataire: **Schrimpf, Robert**
**Cabinet Regimbeau**
**26, Avenue Kléber**
**F-75116 Paris (FR)**

(56) Documents cités:
**EP-A- 0 398 135**          **US-A- 3 438 881**

• **PATENT ABSTRACTS OF JAPAN vol. 14, no. 565 (P-1143)17 Décembre 1990**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne une structure de composant optique intégré destiné à fonctionner à une longueur d'onde $\lambda_1$ de fluorescence d'un ion de terre rare. Elle concerne également un procédé de réalisation d'une telle structure, ainsi que diverses applications.

L'invention trouve une application particulièrement avantageuse dans le domaine des télécommunications par guides d'onde optiques.

Dilués dans un solide, les ions de terres rares sont à l'origine de fluorescences, dans le visible et le proche infrarouge, correspondant à des transitions électroniques internes à leurs couches 4 f protégées par leurs couches 5 s et 5 p. Parmi ceux-ci, on peut citer l'ion erbium $Er^{3+}$ qui présente notamment une transition $^4I_{13/2} \rightarrow {}^4I_{15/2}$ radiative qui revêt un intérêt particulier puisque dans ce cas la longueur d'onde $\lambda_1$ émise (1,54 μm) correspond aux minima d'absorption et de variation relative d'indice dn/d $\lambda$ des guides d'onde optiques en silice.

On connaît de l'état de la technique une structure de composant optique intégré conforme au préambule, constitué par un matériau semiconducteur, silicium ou composé III-V, dopé à l'erbium notamment, soit par implantation ionique, soit par épitaxie par jets moléculaires.

L'étude de ce type de structure connue a montré que, comme cela est prévisible, la nature du matériau hôte n'a que peu d'influence sur l'énergie des radiations émises par l'ion de terre rare.

Par contre, il a été clairement établi que le rendement de fluorescence, fonction de la teneur en terre rare, croît, à température constante, avec la largeur de la bande d'énergie interdite du matériau semiconducteur. Pour obtenir à température ambiante un rendement de fluorescence comparable à celui relevé à 77 K, une largeur de bande d'énergie interdite de la matrice hôte voisine de 2,5 eV semble devoir être requise.

Par ailleurs, au moins dans le cas de l'erbium, il a été montré que, si dans un premier temps l'intensité de luminescence croît avec la teneur en élément dopant, un maximum est atteint pour des concentrations aussi faibles que $10^{18}cm^{-3}$. La décroissance de la fluorescence à forte concentration des centres luminescents s'explique par les phénomènes de relaxation croisée et d'auto-extinction par concentration. Elle est favorisée par la création de défauts d'ordonnancement des atomes, créés lors du dopage.

Aussi, le problème technique à résoudre par l'objet de la présente invention est de réaliser une structure de composant optique intégré destiné à fonctionner à une longueur d'onde $\lambda_1$ de fluorescence d'un ion de terre rare, structure qui permettrait de lever les contraintes précitées, et en particulier celle liée à la décroissance de la fluorescence à forte concentration.

La solution au problème technique posé consiste, selon la présente invention, en ce que ladite structure est constituée, au moins, par une couche mince d'une solution solide d'un fluorure mixte de terre rare de formule $(1-x) (M_{1-y} M'_y F_2)-xTRF_z$ déposée sur un substrat d'un matériau semiconducteur monocristallin, $TRF_z$ désignant un fluorure de terre rare, et dans lequel M et M' étant des ions alcalino-terreux, $M_{1-y} M'_y F_2$ désignant un fluorure d'alcalino-terreux qui constitue le matériau hôte du fluorure de terre rare, x étant compris entre 0 et 1 et étant différent de 0 et de 1, y étant compris entre 0 et 1.

En effet, dans ce cas, le matériau hôte, constitué par un fluorure d'alcalino-terreux, peut présenter une très forte largeur de bande interdite, supérieure à 10 eV par exemple pour le fluorure de calcium $CaF_2$. De plus, les défauts d'ordonnancement atomique, responsables, du moins en partie, du phénomène d'auto-extinction par concentration, observé lors d'un dopage classique, peuvent être réduits puisque, comme on le verra plus loin dans l'exemple de l'erbium, la terre rare est substituée au(x) cation(s) d'alcalino-terreux dans les poudres initiales lors de la réalisation de ladite solution solide.

Il faut également souligner que dans les fluorures, les photons étant moins énergétiques que dans les oxydes ou les semiconducteurs, de telles matrices favorisent les rendements de fluorescence au détriment des recombinaisons non radiatives.

Enfin, il convient de remarquer que le système cristallographique de $CaF_2$, $SrF_2$ et $BaF_2$ (cubique face centrée du type fluorine) est très proche de ceux des principaux semiconducteurs (cubique face centrée du type diamant ou zinc blende), et que leurs paramètres de maille sont très voisins de ceux du silicium, d'InP et de GaSb respectivement. De plus, il a été établi que l'on pouvait obtenir à l'état de couches minces des solutions solides de fluorures d'alcalino-terreux dont le paramètre de maille peut être exactement ajusté à celui des différents substrats semiconducteurs, notamment de GaAs.

Cependant, la substitution de x cations alcalino-terreux par x ions de terre rare et l'adjonction de x ions fluor pour réaliser la solution solide de fluorure mixte de terre rare a tendance à modifier le paramètre de maille du fluorure d'alcalino-terreux de départ $M_{1-y} M'_y F_2$.

Aussi, un deuxième problème technique à résoudre par l'objet de la présente invention est de proposer un procédé de réalisation d'une structure de composant optique intégré conforme à l'invention, qui pourait être mise en oeuvre même pour des fractions molaires x élevées de fluorure de terre rare.

Selon la présente invention, la solution à ce deuxième problème technique consiste en un procédé caractérisé en ce qu'il comprend les étapes suivantes :

- préparation d'une poudre initiale de fluorure d'alcalino-terreux $M_{1-y} M'_y F_2$,
- préparation d'une poudre initiale de fluorure de terre rare $TRF_z$,
- mélange desdites poudres initiales dans une fraction molaire x déterminée,
- réalisation d'une solution solide de fluorure mixte de terre rare $(1-x) (M_{1-y} M'_y F_2)-x TRF_z$,

- dépôt par épitaxie de ladite couche mince de solution solide sur une face dudit substrat de matériau semiconducteur monocristallin.

Outre la possibilité d'obtenir, par épitaxie contrainte, des couches minces de solution solide de fluorure mixte de terre rare dont la fraction molaire x en fluorure de terre rare peut atteindre 20 %, le procédé selon l'invention présente d'autres avantages comme celui de minimiser les défauts dans le volume du matériau luminescent, sources de centres d'extinction, ou de réaliser des composants optiques intégrés divers, tels que guides optiques, microlasers ou dispositifs convertisseurs.

La description qui va suivre en regard des dessins annexés donnés à titre d'exemples non limitatifs fera bien comprendre en quoi consiste l'invention et comment elle peut être réalisée.

La figure 1 est une vue en coupe d'une structure de composant optique intégré conforme à l'invention.

La figure 2a est une vue en perspective d'un guide optique de type mésa comprenant une structure analogue à celle de la figure 1.

La figure 2b est une variante de type planar du guide optique de la figure 2a.

La figure 3a est une vue en coupe d'un microlaser de type mésa comprenant une structure analogue à celle de la figure I et des miroirs extérieurs.

La figure 3b est une première variante du microlaser de la figure 3a comprenant des miroirs latéraux de surface.

La figure 3c est une deuxième variante du type planar du microlaser de la figure 3a.

La figure 3d est une troisième variante du type planar du microlaser de la figure 3a comprenant des miroirs latéraux de surface.

La figure 4a est une vue en coupe d'un microlaser analogue à celui de la figure 3d comprenant une source d'excitation intégrée.

La figure 4b est une vue en coupe du microlaser de la figure 4a intégré sur un substrat.

La figure 5a est une vue en coupe d'un dispositif convertisseur à émetteur extérieur comprenant une structure analogue à celle de la figure 1.

La figure 5b est une variante à émetteur intégré du dispositif convertisseur de la figure 5a.

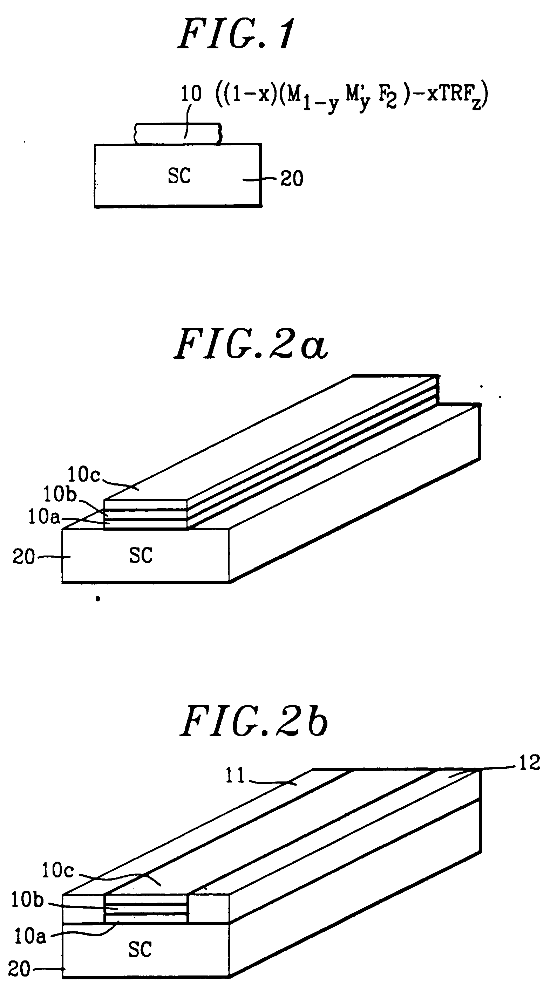

La figure 1 montre en coupe une structure de composant optique intégré destiné à fonctionner à une longueur d'onde $\lambda_1$ de fluorescence d'un ion de terre rare. Cette structure est constituée d'une couche mince 10 d'une solution solide d'un fluorure mixte de terre rare, de formule

$$(1-x)\ (M_{1-y}\ M'_y\ F_2) - x\ TRF_z$$

M et M' désignant un ion alcalino-terreux, notamment $Ca^{2+}$ et $Sr^{2+}$, $TRF_z$ désignant un fluorure de terre rare, x étant compris dans l'intervalle ]0,1[ et y étant compris dans l'intervalle [0,1].

La couche mince 10 est déposée sur un substrat 20 d'un matériau semiconducteur monocristallin tel que le silicium ou un composé III-V comme GaAs, GaSb, InP, etc.

Il est bien entendu que la structure de composant optique intégré conforme à l'invention peut comporter plusieurs couches minces de solutions solides de fluorure mixte de terre rare. Des structures à trois couches minces successives seront d'ailleurs explicitées plus loin en regard de quelques exemples d'applications.

La structure de composant optique intégré représentée à la figure 1 est réalisée conformément à un procédé qui sera maintenant décrit dans l'exemple de la solution solide contenant du fluorure d'erbium :

$$(1-x)\ CaF_2 - x\ ErF_3.$$

Une poudre initiale de fluorure de calcium $CaF_2$ est préparée à partir d'un fluorure du commerce refluoré sous une atmosphère de fluor juste avant son utilisation afin d'éliminer les éventuelles traces d'oxydes et de vapeur d'eau qu'il peut contenir.

La poudre initiale de fluorure d'erbium $ErF_3$ est préparée à partir d'un oxyde $Er_2O_3$ du commerce. La procédure expérimentale est la suivante : l'oxyde est chauffé à 100°C sous une atmosphère de fluor pour éliminer toute trace de vapeur d'eau, puis porté à une température de 800°C dans un four à haute fréquence dans un courant de HF gazeux.

Les poudres ainsi obtenues sont mélangées dans une fraction molaire x déterminée par pesée des poudres initiales en boîte sèche sous atmosphère d'azote. Après homogénéisation, le mélange est chauffé à 200°C sous un vide primaire dans un tube de platine afin d'éliminer toute trace de gaz adsorbés. Enfin, le tube est scellé et porté à 1100°C pendant 15 heures, avant d'être trempé. Le tube contient alors la solution solide recherchée $(1-x)\ CaF_2-xErF_3$ que l'on peut écrire aussi $Ca_{1-x}\ Er_x\ F_{2+x}$.

L'analyse radiocristallographique de la solution solide obtenue permet de contrôler que tout le mélange des poudres initiales a été intégralement transformé en alliage, et, par le déplacement des pics de diffraction, que la fraction molaire x est conforme à celle qui fut préalablement choisie, ceci est également vérifié par rétrodiffusion d'ions de haute énergie (RBS). On peut donc vérifier que la solution solide obtenue dans les conditions décrites précédemment est constituée d'une phase unique de type fluorine dont le paramètre de maille croît sensiblement linéairement avec la fraction molaire x. Cet accroissement de la maille du fluorure de calcium initial est dû essentiellement à l'introduction des ions $F^-$ supplémentaires dans des sites interstitiels, alors que le remplacement de l'ion $Ca^{2+}$ par l'ion $Er^{3+}$, de taille plus petite, tend à contracter la maille de $CaF_2$.

La Demanderesse a ainsi réalisé des solutions solides de $Ca_{1-x}\ Er_x\ F_{2+x}$ dont la fraction molaire x en fluorure d'erbium était supérieure à 10 %, jusqu'à 20 %. Même pour ces valeurs élevées du paramètre x, des études de catholuminescence dans le visible ont montré que l'émission des solutions solides était homogène révélant ainsi une bonne interdiffusion des constituants initiaux CaF$_2$ et ErF$_3$.

Les substrats de matériau semiconducteur monocristallin, silicium par exemple, sont dégraissés (trichloroéthylène, acétone, méthanol, trichloroéthylène, méthanol, eau désionisée), oxydés (HNO$_3$) désoxydés (HF-C$_2$H$_5$OH, 1 : 10), maintenus dans un bain d'eau désionisée puis introduits dans la chambre de préparation d'un réacteur d'épitaxie où ils subissent une dernière désoxydation (HF-C$_2$H$_5$OH) sous atmosphère inerte (N$_2$). Après montage sur les porte-échantillons, les substrats sont transférés dans la chambre d'épitaxie proprement dite où sont réalisés les dépôts de couches minces de solution solide, après une reconstruction de surface (chauffage à 900° pendant 30 mn) contrôlée par diffraction d'électrons de haute énergie (RHEED, 10 keV).

Les couches minces sont alors épitaxiées sur une face du substrat, la face cristallographique [100] par exemple, dans les conditions suivantes :

- vide limite avant chauffage des creusets de platine contenant la solution solide : 3.10$^{-11}$ Torr,
- température des substrats pendant la croissance : $T_S = 450°C$,
- température de sublimation des poudres : 1100°C environ,
- vitesse de condensation des vapeurs : Vc = 10$^{-1}$ nm/s (contrôlée par balance à quartz piézoélectrique),
- pression finale : 10$^{-9}$ Torr.

Après la réalisation des dépôts, les échantillons sont récupérés dans l'air ou montés dans une chambre d'analyse pour des études de caractérisation "in situ". Une étude par microscopie électronique à balayage a montré que les couches minces obtenues sont homogènes, compactes et adhèrent bien aux substrats. De plus, les spectres de diffraction X des poudres résiduelles recueillies dans le creuset après évaporation ne présentent aucune modification apparente par rapport aux spectres initiaux. Le chauffage à la température de sublimation ne semble donc pas avoir modifié la composition des solutions solides, comme le montrent les spectres de RBS.

Enfin, quel que soit le taux de substitution x, entre 4 et 20 %, les couches minces se caractérisent par une fluorescence intense, correspondant principalement :

- dans le visible, aux transitions :

$$^4H_{9/2} \rightarrow {}^4I_{15/2} \text{ à } 0,46 \text{ } \mu m$$

$$^4S_{3/2} \rightarrow {}^4I_{15/2} \text{ à } 0,55 \text{ } \mu m$$

$$^4F_{9/2} \rightarrow {}^4I_{15/2} \text{ à } 0,66 \text{ } \mu m$$

- dans le proche infrarouge, aux transitions :

$$^4I_{11/2} \rightarrow {}^4I_{15/2} \text{ à } 0,98 \text{ } \mu m$$

$$^4I_{13/2} \rightarrow {}^4I_{15/2} \text{ à } 1,54 \text{ } \mu m$$

Le procédé décrit ci-dessus ne fait référence qu'à la solution solide Ca$_{1-x}$Er$_x$F$_{2+x}$ sur Si[100]. Il faut toutefois préciser que des résultats identiques ont été obtenus par la Demanderesse avec

$$(1-x)SrF_2\text{-}xErF3 \text{ /InP[100]}$$

et

$$(1-x)(Sr_{1-y}Ca_yF_2)\text{-}xErF_3/GaAs[100]$$

Des applications de la structure de composant optique intégré selon l'invention seront maintenant décrites en référence aux figures 2a à 5b.

Les figures 2a et 2b montrent en perspective deux composants optiques intégrés présentant une même structure guidante, constitués, chacun, d'une structure analogue à celle de la figure 1 comportant une première couche mince 10a en microruban d'indice n$_a$ d'une première solution solide de fluorure mixte de terre rare, de l'erbium par exemple, déposée sur le substrat 20 de matériau semiconducteur monocristallin, une deuxième couche mince 10b en microruban d'indice n$_b$ supérieur à n$_a$ d'une deuxième solution solide de fluorure mixte d'erbium déposée sur ladite première couche mixte 10a, et un troisième milieu 10c d'indice n$_c$ inférieur à n$_b$. Dans l'exemple des figures 2a et 2b, ce troisième milieu 10c consiste en une troisième couche mince en microruban d'une troisième solution solide de fluorure mixte d'erbium déposée sur ladite deuxième couche mince 10b. Bien entendu, ledit troisième milieu pourrait être constitué par l'air ambiant lui-même.

Les valeurs des différents indices sont obtenues en ajustant la composition en terre rare de chacune des solutions solides. Dans le cas de Ca$_{1-x}$Er$_x$F$_{2+x}$ par exemple, la Demanderesse a montré que l'indice pouvait varier de 1,43 à 1,47 quand x varie de 4 à 20 %. Plus précisément, on peut envisager une structure guidante dans laquelle les trois couches minces 10a, 10b et 10c ont 1 $\mu$m d'épaisseur, la fraction molaire x de ces couches étant respectivement 0,035, 0,200 et 0,035. Le substrat est choisi parmi Si, InP et GaAs. Un tel composant à structure guidante fonctionne au moins sur les longueurs d'onde $\lambda_1$ suivantes de l'erbium : 0,66 $\mu$m, 0,98 $\mu$m et 1,54 $\mu$m de l'erbium.

Dans le mode de réalisation particulier du guide optique de la figure 2a, les première 10a, deuxième 10b et troisième 10c couches minces en microruban forment un microruban de type mésa.

Selon la variante d'exécution illustrée à la figure 2b, les première 10a, deuxième 10b et troisième 10c couches minces en microruban forment un microruban de type planar avec deux couches latérales 11 et 12 en microruban de ladite première ou troisième solution solide de fluorure mixte de terre rare.

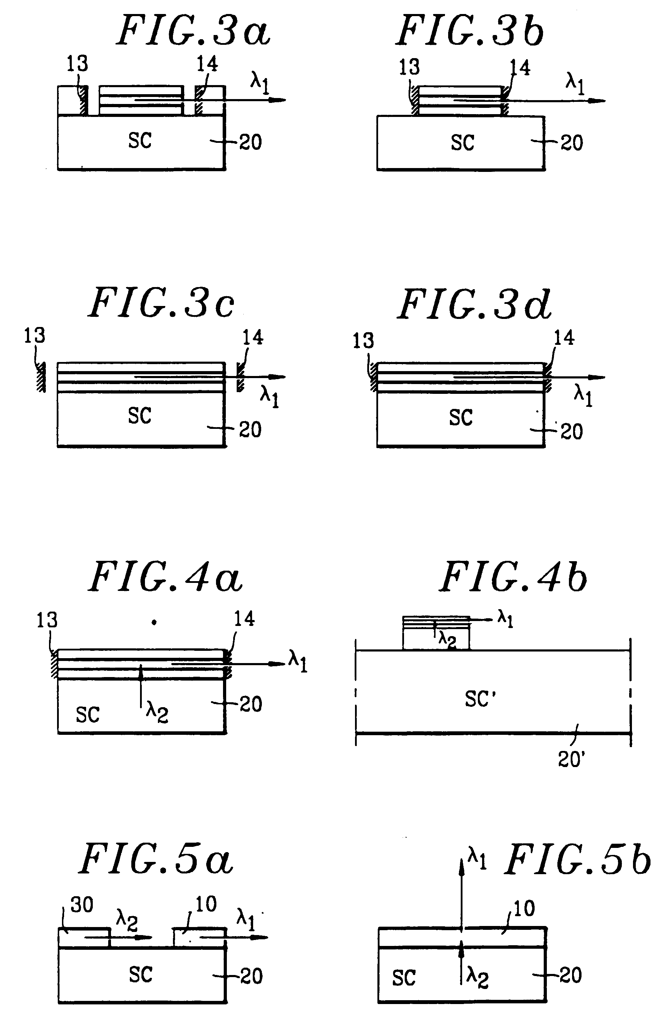

Les figures 3a à 4b montrent plusieurs modes de réalisation d'un microlaser comprenant un composant optique intégré à structure guidante telle que précédemment décrite dans lequel les première 10a, deuxième 10b et troisième 10c couches minces sont placées entre deux miroirs formant cavité. Ledit microlaser comprend également un moyen de pompage optique de ladite terre rare qui, dans les exemples des figures 3a à 3d, est un moyen extérieur, non représenté, par exemple un laser à argon à 0,488 μm.

Les microlasers des figures 3a et 3b ont une structure de type mésa, tandis que ceux montrés aux figures 3c et 3d sont du type planar.

Les miroirs 13, 14 peuvent être disposés à l'extérieur des couches minces comme dans le cas des figures 3a et 3c, ou être constitués par des couches métalliques minces déposées sur les faces latérales des couches minces en microruban ainsi que l'illustrent les figures 3b et 3d.

Notons que ces microlasers fonctionnent à la température ambiante et que la longueur d'onde $\lambda_1$ d'émission (1,54 μm par exemple dans le cas de l'erbium) est constante quelle que soit la température. Le substrat 20 du semiconducteur est ici inactif, il ne sert que de support.

En revanche, dans le microlaser de la figure 4a, le substrat 20 semiconducteur constitue lui-même le moyen de pompage sous forme d'une diode électroluminescente ou d'une diode laser, à commande électrique, émettant à une longueur d'onde $\lambda_2$ égale à 0,66 μm ou 0,98 μm lorsque la terre rare considérée est de l'erbium. On peut également utiliser la longueur d'onde à 0,488 μm d'une diode émettrice dans le bleu. D'une manière générale, la longueur d'onde $\lambda_2$ doit être telle qu'il se produit une absorption dans les couches minces de solution solide.

De préférence, ledit moyen de pompage émet par la surface et excite les impuretés de terre rare contenues dans les couches minces de solution solide. Dans la structure guidante, la lumière à la longueur d'onde $\lambda_1$ (1,54 μm pour l'erbium) peut donner lieu à effet laser lorsque la structure est appropriée, notamment par la présence des miroirs latéraux 13, 14 qui forment la cavité résonnante.

Le schéma de la figure 4b montre un composant intégré dans lequel le microlaser de la figure 4a est rapporté sur un substrat 20' semiconducteur qui peut recevoir d'autres éléments destinés à coopérer avec ledit microlaser.

La figure 5a donne le schéma d'un dispositif convertisseur optique comprenant une structure analogue à celle décrite en regard de la figure 1. Ce dispositif inclut un moyen 30 de commande produisant un rayonnement à une longueur d'onde $\lambda_2$ inférieure à $\lambda_1$ qui a pour effet d'exciter les ions de terre rare contenus dans la couche mince 10, ceux-ci émettant ensuite à la longueur d'onde $\lambda_1$. Dans l'exemple de la figure 5a, le moyen 30 de commande peut être un laser extérieur comme une diode laser émettant à 0,488 μm.

Selon le mode de réalisation schématique de la figure 5b, le moyen de commande du dispositif convertisseur est constitué par le substrat 20 de matériau semi-conducteur lui-même, comme dans le cas du microlaser à moyen de pompage intégré.

## Revendications

1. Structure de composant optique intégré destiné à fonctionner à une longueur d'onde $\lambda_1$ de fluorescence d'un ion de terre rare, caractérisée en ce qu'elle est constituée, au moins, par une couche mince (10) d'une solution solide d'un fluorure mixte de terre rare de formule $(1-x)(M_{1-y} M'_y F_2)-x$ $TRF_z$ déposée sur un substrat (20) d'un matériau semi-conducteur monocristallin, $TRF_z$ désignant un fluorure de terre rare, et dans lequel M et M' étant des ions alcalino-terreux, $M_{1-y} M'_y F_2$ désignant un fluorure d'alcalino-terreux qui constitue le matériau hôte du fluorure de terre rare, x étant compris entre 0 et 1 et étant différent de 0 et de 1, y étant compris entre 0 et 1.

2. Structure de composant optique intégré selon la revendication 1, caractérisée en ce que l'ion terre rare du fluorure de terre rare est l'ion erbium $Er^{3+}$, la longueur d'onde $\lambda_1$ correspondant à la transition $^4I_{13/2} \rightarrow {}^4I_{15/2}$ à 1,54 μm,

3. Structure de composant optique intégré selon l'une des revendications 1 ou 2, caractérisée en ce que la fraction molaire x de fluorure de terre rare $TRF_z$ est comprise dans l'intervalle ]0,0,2].

4. Structure de composant optique intégré selon l'une quelconque des revendications 1 à 3, caractérisée en ce que ledit matériau semiconducteur monocristallin est du silicium.

5. Structure de composant optique intégré selon l'une quelconque des revendications 1 à 3, caractérisé en ce que ledit matériau semiconducteur monocristallin est un composé III-V.

6. Procédé de réalisation d'une structure de composant optique intégré selon l'une quelconque des revendications 1 à 5, caractérisé en ce qu'il comprend les étapes suivantes :

   - préparation d'une poudre initiale de fluorure d'alcalino-terreux $M_{1-y}M'_y F_2$,
   - préparation d'une poudre initiale de fluorure de terre rare $TRF_z$,
   - mélange desdites poudres initiales dans une fraction molaire x déterminée,
   - réalisation d'une solution solide de fluorure mixte de terre rare (1-x) $(M_{1-y}M'_y F_2)$-x$TRF_z$ par chauffage à haute température dudit mélange,

- dépôt par épitaxie de ladite couche mince de solution solide sur une face dudit substrat de matériau semiconducteur monocristallin.

7. Procédé selon la revendication 6, caractérisé en ce que ladite face est une face cristallographique [100].

8. Composant optique intégré à structure guidante, caractérisé en ce qu'il est constitué par une structure de composant optique intégré selon l'une quelconque des revendications 1 à 5 comportant une première couche mince en microruban (10a) d'indice $n_a$ d'une première solution solide de fluorure mixte de terre rare déposée sur ledit substrat (20) de matériau semiconducteur monocristallin, une deuxième couche mince (10b) en microruban d'indice $n_b$ supérieure à $n_a$ d'une deuxième solution solide de fluorure mixte de terre rare déposée sur ladite première couche mince (10a), et un troisième milieu (10c) d'indice $n_c$ inférieur à $n_b$,

9. Composant optique intégré selon la revendication 8, caractérisé en ce que ledit troisième milieu (10c) est constitué par une troisième couche mince en microruban d'une troisième solution solide de fluorure mixte de terre rare déposée sur ladite deuxième couche mince (10b).

10. Guide optique, caractérisé en ce qu'il est constitué par un composant optique intégré selon la revendication 9, dans lequel lesdites première (10a), deuxième (10b) et troisième (10c) couches minces en microruban forment un microruban de type mésa.

11. Guide optique, caractérisé en ce qu'il est constitué par un composant optique intégré selon la revendication 9, dans lequel lesdites première (10a), deuxième (10b) et troisième (10c) couches minces en microruban forment un microruban de type planar avec deux couches latérales (11, 12) en microruban de ladite première ou troisième solution solide de fluorure mixte de terre rare.

12. Microlaser, caractérisé en ce qu'il comprend un composant optique intégré selon l'une quelconque des revendications 9 à 11 dans lequel les première (10a), deuxième (10b) et troisième (10c) couches minces en microruban sont placées entre deux miroirs (13, 14) formant cavité, et en ce qu'il comprend également un moyen de pompage optique de ladite terre rare.

13. Microlaser selon la revendication 12, caractérisé en ce que lesdits miroirs (13, 14) sont disposés à l'extérieur desdites couches minces.

14. Microlaser selon la revendication 12, caractérisé en ce que lesdits miroirs (13, 14) sont des couches métalliques minces déposées sur les faces latérales desdites couches minces de solution solide de fluorure mixte de terre rare.

15. Microlaser selon l'une quelconque des revendications 12 à 14, caractérisé en ce que ledit moyen de pompage optique de la terre rare est un moyen extérieur audit composant optique intégré.

16. Microlaser selon l'une quelconque des revendications 12 à 14, caractérisé en ce que ledit moyen de pompage optique de la terre rare est constitué par ledit substrat (20) de matériau semiconducteur monocristallin.

17. Microlaser selon la revendication 16; caractérisé en ce que le substrat (20) de matériau semiconducteur monocristallin est une diode électroluminescente ou une diode laser.

18. Dispositif convertisseur optique, caractérisé en ce qu'il comprend une structure de composant optique intégré selon l'une quelconque des revendications 1 à 5 et un moyen de commande produisant un rayonnement à une longueur d'onde $\lambda_2$ inférieure à $\lambda_1$.

19. Dispositif selon la revendication 18, caractérisé en ce que ledit moyen de commande est un laser extérieur (30).

20. Dispositif selon la revendication 18, caractérisé en ce que ledit moyen de commande est constitué par ledit substrat (20) de matériau semiconducteur monocristallin.

21. Dispositif selon la revendication 20, caractérisé en ce que le substrat (20) de matériau semiconducteur monocristallin est une diode électroluminescente ou une diode laser.

**Claims**

1. Integrated optical component structure designed to operate at a rare earth ion fluorescence wavelength $\lambda_1$ comprising at least a thin layer (10) of a mixed rare earth fluoride solid solution having the formula (1-x)$(M_{1-y}M'_yF_2)$-x$TRF_z$ deposited on a substrate (20) of a monocrystalline semiconductor material where $TRF_z$ denotes a rare earth fluoride, M and M' denote an alkaline earth ion, $M_{1-y}M'_yF_2$ is an alkali earth fluoride constituting the host material of the rare earth fluoride and x is between 0 and 1, exclu-

sive, and $\underline{y}$ is between 0 and 1.

2. Integrated optical component structure according to claim 1 characterised in that said wavelength $\lambda_1$ represents the $^4I_{13/2} \rightarrow {}^4I_{15/2}$ transition at 1.54 μm of the erbium ion $Er^{3+}$.

3. Integrated optical component structure according to claim 1 or claim 2 characterised in that the molar fraction $\underline{x}$ of rare earth fluoride $TRF_z$ is in the range ]0,0,2].

4. Integrated optical component structure according to any one of claims 1 to 3 characterised in that said monocrystalline semiconductor material is silicon.

5. Integrated optical component structure according to any one of claims 1 to 3 characterised in that said monocrystalline semiconductor material is a III-V compound.

6. Method of producing an integrated optical component structure according to any one of claims 1 through 5 characterised in that it comprises the following stages:

    - preparing an initial powder of alkaline earth fluoride $M_{1-y}M'_yF_2$,
    - preparing an initial powder of rare earth fluoride $TRF_z$,
    - mixing said initial powders in a particular molar fraction $\underline{x}$,
    - producing a mixed rare earth fluoride solid solution $(1-x)(M_{1-y}M'_yF_2)-xTRF_z$ by heating said mixture at high temperature,
    - epitaxially growing said solid solution thin film on a surface of said monocrystalline semiconductor material substrate.

7. Method according to claim 6 characterised in that said surface is a [100] crystal face.

8. Integrated optical component characterised in that it has a guide structure comprising an integrated optical structure according to any one of claims 1 through 5 including a first microstrip thin film (10a) of index $n_a$ of a first mixed rare earth solid solution deposited on said monocrystalline semiconductor material substrate (20), a second microstrip thin film (l0b) of index $n_b$ greater than $n_a$ of a second mixed rare earth solid solution deposited on said first thin film (10a) and a third medium (10c) of index $n_c$ less than $n_b$.

9. Integrated optical component according to claim 8 characterised in that said third medium (10c) comprises a third microstrip thin film of a third mixed rare earth fluoride solid solution deposited on said second thin film (10b).

10. Optical waveguide comprising an integrated optical component according to claim 9 characterised in that said first, second and third microstrip thin films (10a, 10b, 10c) form a mesa type microstrip.

11. Optical waveguide comprising an integrated optical component according to claim 9 characterised in that said first, second and third microstrip thin films (10a, 10b, 10c) form a planar type microstrip with two microstrip lateral layers (11, 12) of said first or third mixed rare earth fluoride solid solution.

12. Microlaser characterised in that it comprises an integrated optical component according to any one of claims 9 through 11 in which said first, second and third microstrip thin films (10a, 10b, 10c) are disposed between two mirrors (13, 14) defining a cavity and in that it further comprises means for optically pumping said rare earth.

13. Microlaser according to claim 12 characterised in that said mirrors (13, 14) are disposed externally of said thin films.

14. Microlaser according to claim 12 characterised in that said mirrors (13, 14) are metal thin films deposited on the lateral faces of said mixed rare earth fluoride solid solution thin films.

15. Microlaser according to any one of claims 12 to 14 characterised in that said optical pumping means for optically pumping said rare earth are external to said integrated optical component.

16. Microlaser according to any one of claims 12 to 14 characterised in that said optical pumping means for optically pumping said rare earth comprise said monocrystalline semiconductor material substrate (20).

17. Microlaser according to claim 16 characterised in that said monocrystalline semiconductor material substrate (20) is a light-emitting diode or a laser diode.

18. Optical converter device characterised in that it comprises an integrated optical component structure according to any one of claims 1 through 5 and control means producing radiation at a wavelength $\lambda_2$ less than $\lambda_1$.

19. Device according to claim 18 characterised in that said control means comprise an external laser (30).

20. Device according to claim 18 characterised in that said control means comprise said monocrystalline semiconductor material substrate (20).

21. Device according to claim 20 characterised in that said monocrystalline semiconductor material substrate (20) is a light-emitting diode or a laser diode.

**Patentansprüche**

1. Integrierte optische Komponentenstruktur, zum Betrieb bei einer Fluoreszenzwellenlänge $\lambda_1$ eines Ions einer seltenen Erde, dadurch gekennzeichnet, daß sie mindestens aus einer dünnen Schicht (10) einer festen Lösung eines Misch-Fluorids seltener Erden der Formel (1-x) $(M_{1-y}M'_yF_2)$-xSEF$_z$ besteht, die auf ein Substrat (20) aus monokristallinem Halbleitermaterial aufgebracht wurde, wobei SEF$_z$ ein Fluorid seltener Erden bezeichnet, und wobei M und M' Erdalkalischeionen sind, $M_{1-y}M'_yF_2$ ein Fluorid von Erdalkalien bezeichnet, welches das Grundmaterial des Fluorids seltener Erden bildet, x zwischen 0 und 1 liegt und von 0 und 1 verschieden ist und y zwischen 0 und 1 liegt.

2. Integrierte optische Komponentenstruktur nach Anspruch 1, dadurch gekennzeichnet, daß das Seltene-Erden-Ion des Fluorids seltener Erden das Erbiumion $Er^{3+}$ ist, wobei die Wellenlänge $\lambda_1$ dem Übergang $^4I_{13/2} \rightarrow {}^4I_{15/2}$ bei 1,54 µm entspricht.

3. Integrierte optische Komponentenstruktur nach einem der Ansprüche 1 oder 2, dadurch gekennzeichnet, daß der Molenbruch x des Fluorids der seltenen Erde SEF$_z$ im Intervall ]0,0,2] liegt.

4. Integrierte optische Komponentenstruktur nach einem der Ansprüche 1 bis 3, dadurch gekennzeichnet, daß das besagte monokristalline Halbleitermaterial Silicium ist.

5. Integrierte optische Komponentenstruktur nach einem der Ansprüche 1 bis 3, dadurch gekennzeichnet, daß das besagte monokristalline Halbleitermaterial eine Verbindung III-V ist.

6. Verfahren zur Herstellung einer integrierten optischen Komponentenstruktur nach einem der Ansprüche 1 bis 5, dadurch gekennzeichnet, daß es die folgenden Schritte umfaßt:

   - Herstellung eines Ausgangspulvers des Fluorids der Erdalkalien $M_{1-y}M'_yF_2$,
   - Herstellung eines Ausgangspulvers des Fluorids seltener Erden SEF$_z$,
   - Mischen der besagten Ausgangspulver entsprechend einem bestimmten Molenbruch x,
   - Herstellen einer festen Lösung des Mischfluorids der seltener Erden (1-x) $(M_{1-y}M'_yF_2)$-xSEF$_z$

   durch Erwärmen der besagten Mischung auf eine hohe Temperatur, und
   - epitaxiales Aufwachsen der besagten dünnen Schicht der festen Lösung auf eine Fläche des besagten Substrats aus monokristallinem Halbleitermaterial.

7. Verfahren nach Anspruch 6, dadurch gekennzeichnet, daß die besagte Fläche eine kristallographische Fläche [100] ist.

8. Integrierte optische Komponente mit Leiterstruktur, dadurch gekennzeichnet, daß sie aus einer integrierten optischen Komponentenstruktur nach einem der Ansprüche 1 bis 5 besteht, welche eine erste dünne Schicht in Form eines Mikrostreifens (10a) mit einem Index $n_a$ aus einer ersten festen Lösung eines Misch-Fluorids seltener Erden, die auf das besagte Substrat (20) aus monokristallinem Halbleitermaterial aufgebracht wurde, eine zweite dünne Schicht (10b) in Form eines Mikrostreifens mit einem Index $n_b$, der größer als $n_a$ ist, aus einer zweiten festen Lösung eines Mischfluorids einer seltenen Erde, die auf die besagte erste dünne Schicht (10a) aufgebracht wurde, und ein drittes Medium (10c) mit einem Index $n_c$, der kleiner als $n_b$ ist, umfaßt.

9. Integrierte optische Komponente nach Anspruch 8, dadurch gekennzeichnet, daß das besagte dritte Medium (10c) aus einer dritten dünnen Schicht in Form eines Mikrostreifens aus einer dritten festen Lösung eines Mischfluorids seltener Erden, die auf die besagte zweite dünne Schicht (10b) aufgebracht wurde, besteht.

10. Lichtleiter, dadurch gekennzeichnet, daß er aus einer integrierten optischen Komponente nach Anspruch 9 besteht, bei der die besagte erste (10a), zweite (10b) und dritte (10c) dünne Schicht in Form eines Mikrostreifens einen Mikrostreifen vom Mesa-Typ bilden.

11. Lichtleiter, dadurch gekennzeichnet, daß er aus einer integrierten optischen Komponente nach Anspruch 9 besteht, bei der die besagte erste (10a), zweite (10b) und dritte (10c) dünne Schicht in Form eines Mikrostreifens einen Mikrostreifen vom Planar-Typ mit zwei seitlichen Schichten (11, 12) in Form von Mikrostreifen aus der besagten ersten oder dritten festen Lösung eines Mischfluorids seltener Erden bilden.

12. Mikrolaser, dadurch gekennzeichnet, daß er eine integrierte optische Komponente nach einem der Ansprüche 9 bis 11 umfaßt, bei der die erste (10a), zweite (10b) und dritte (10c) dünne Schicht in Form eines Mikrostreifens zwischen zwei Spiegeln (13, 14) angeordnet sind, die einen Hohlraum bilden, und dadurch, daß er weiterhin ein Mittel zum optischen Pumpen der besagten seltenen Erde umfaßt.

13. Mikrolaser nach Anspruch 12, dadurch gekennzeichnet, daß die besagten Spiegel (13, 14) außerhalb der besagten dünnen Schichten angeordnet sind.

14. Mikrolaser nach Anspruch 12, dadurch gekennzeichnet, daß die besagten Spiegel (13, 14) dünne metallische Schichten sind, die auf die Seitenflächen der besagten dünnen Schichten aus einer festen Lösung eines Mischfluorids seltener Erden aufgetragen sind.

15. Mikrolaser nach einem der Ansprüche 12 bis 14, dadurch gekennzeichnet, daß das besagte Mittel zum optischen Pumpen der seltenen Erde ein Mittel ist, das sich außerhalb der besagten integrierten optischen Komponente befindet.

16. Mikrolaser nach einem der Ansprüche 12 bis 14, dadurch gekennzeichnet, daß das besagte Mittel zum optischen Pumpen der seltenen Erde von dem besagten Substrat (20) aus monokristallinem Halbleitermaterial gebildet wird.

17. Mikrolaser nach Anspruch 16, dadurch gekennzeichnet, daß das Substrat (20) aus monokristallinem Halbleitermaterial eine Lichtemittierende Diode oder eine Laserdiode ist.

18. optische Wandlervorrichtung, dadurch gekennzeichnet, daß sie eine integrierte optische Komponentenstruktur nach einem der Ansprüche 1 bis 5 und ein Steuermittel, das eine Strahlung mit einer Wellenlänge $\lambda_2$ erzeugt, die kleiner als $\lambda_1$ ist, umfaßt.

19. Vorrichtung nach Anspruch 18, dadurch gekennzeichnet, daß das besagte Steuermittel ein äußerer Laser (30) ist.

20. Vorrichtung nach Anspruch 18, dadurch gekennzeichnet, daß das besagte Steuermittel von dem besagten Substrat (20) aus monokristallinem Halbleitermaterial gebildet wird.

21. Vorrichtung nach Anspruch 20, dadurch gekennzeichnet, daß das Substrat (20) aus monokristallinem Halbleitermaterial eine Lichtemittierende Diode oder eine Laserdiode ist.

# *FIG.1*

$10 \quad ((1-x)(M_{1-y}M'_y F_2)-xTRF_z)$

SC — 20

# *FIG.2α*

10c
10b
10a

20 — SC

# *FIG.2b*

11 — 12

10c
10b
10a — SC

20 —

# FIG.3a

13    14    λ₁

SC    20

# FIG.3b

13    14    λ₁

SC    20

# FIG.3c

13    14

SC    20    λ₁

# FIG.3d

13    14

SC    20    λ₁

# FIG.4a

13    14    λ₁

SC    λ₂    20

# FIG.4b

λ₁
λ₂

SC'

20'

# FIG.5a

30    λ₂    10    λ₁

SC    20

# FIG.5b

λ₁    10

SC    λ₂    20